# EUROPEAN PATENT SPECIFICATION

(11) **EP 3 400 124 B1**
(45) Date of publication and mention of the grant of the patent: **23.10.2019**
(21) Application number: 16829203.5
(22) Date of filing: 29.12.2016
(51) Int. Cl.: B29C 51/00, B29K 23/00, B29K 25/00, B29K 69/00, B29K 433/04, B29K 105/04

(54) **THERMOFORMED MICROCAPILLARY SHEETING**
THERMOGEFORMTE MIKROKAPILLARE FOLIE
FEUILLE MICROCAPILLAIRE THERMOFORMÉE

(30) Priority: 05.01.2016 US 201662274984 P
(43) Date of publication of application: 14.11.2018
(73) Proprietor: Dow Global Technologies LLC, Midland, MI 48674 (US)
(72) Inventor: HUANG, Wenyi, Midland Michigan 48674 (US); DOOLEY, Joseph, Charlestown Indiana 47111 (US); MARTIN, Jill M., Freeport Texas 77541 (US); BHATTACHARJEE, Debkumar, Blue Bell Pennsylvania 19422 (US); HOGAN, Todd A., Midland Michigan 48674 (US); SANKETH, Kumar N., Freeport Texas 77541 (US)
(74) Representative: Boult Wade Tennant LLP
(86) International application number: PCT/US2016/069144
(87) International publication number: WO 2017/120093

(56) References cited:
- WO-A1-2014/003761
- WO-A1-2015/123031
- FR-A1- 2 208 767
- GB-A- 2 041 292

## Description

### TECHNICAL FIELD

Embodiments described herein relate generally to thermoformed microcapillary sheeting and articles comprising such sheeting. Such thermoformed microcapillary sheeting and articles can be used as alternative lightweighting packaging applications to thermoformed foam structures, while providing enhanced optical clarity and mechanical properties.

### BACKGROUND

Thermoforming represents an important process to shape plastic sheets into rigid or flexible packaging products. Currently, a significant amount of lightweighting applications, including lightweighting packaging applications, are produced using thermoformed foam structures. However, such thermoformed foam structures are not transparent and have significant reduction in mechanical properties after thermoforming. Thus, there is a need in the art for alternative thermoformed structures for lightweighting applications that allow for both improved optical clarity and maintained mechanical properties after thermoforming.

### SUMMARY

Embodiments of the present disclosure meet those needs by providing thermoformed microcapillary sheeting that expands the horizons of microcapillary technology. For example, the thermoformed microcapillary sheeting can be used in lightweighting applications. Even more particularly, the thermoformed microcapillary sheeting can be used for lightweighting packaging applications such as rigid or flexible packaging products. The thermoformed microcapillary sheetings exhibit improved optical clarity and mechanical properties as compared to alternative thermoformed structures for lightweighting applications, such as thermoformed foam structures.

According to one embodiment of the present disclosure, a thermoformed microcapillary sheeting is provided. The thermoformed microcapillary sheeting is prepared by a process comprising the steps of (a) providing a thermoplastic sheeting comprising a thermoplastic material, wherein the thermoplastic sheeting comprises at least one or more microcapillary channel disposed therein, the at least one or more microcapillary channel having an initial volume based on a total volume of the microcapillary sheeting; and (b) heating the thermoplastic sheeting to a temperature at which the thermoplastic material is deformable to form a thermoformed microcapillary sheeting with the at least one or more microcapillary channels disposed therein, the at least one or more microcapillary channels having a final volume based on a total volume of the thermoformed microcapillary sheeting. The final volume of the at least one or more microcapillary channels of the thermoformed microcapillary sheeting is at least 10 percent of the initial volume of at least one or more microcapillary channels of the thermoplastic sheeting.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 is a top view of an exemplary thermoformed microcapillary sheeting.
FIG. 2 is a longitudinal view of an exemplary thermoformed microcapillary sheeting.
FIG. 3 is cross-sectional view of an exemplary thermoformed microcapillary sheeting along line 3-3 in FIG. 2.
FIG. 4 is an elevated view of an exemplary thermoformed microcapillary sheeting.
FIGS. 5(a)-(b) are schematic illustrations of a microcapillary die.
FIG. 6 is a schematic of an exemplary 24" microcapillary sheeting die in a microcapillary sheeting extrusion line.
FIG. 7 depicts an exemplary designed frame to mount the microcapillary die onto the sheeting casting line. FIG. 7(a) is a front view of the frame. FIG. 7(b) is a back view of the frame.

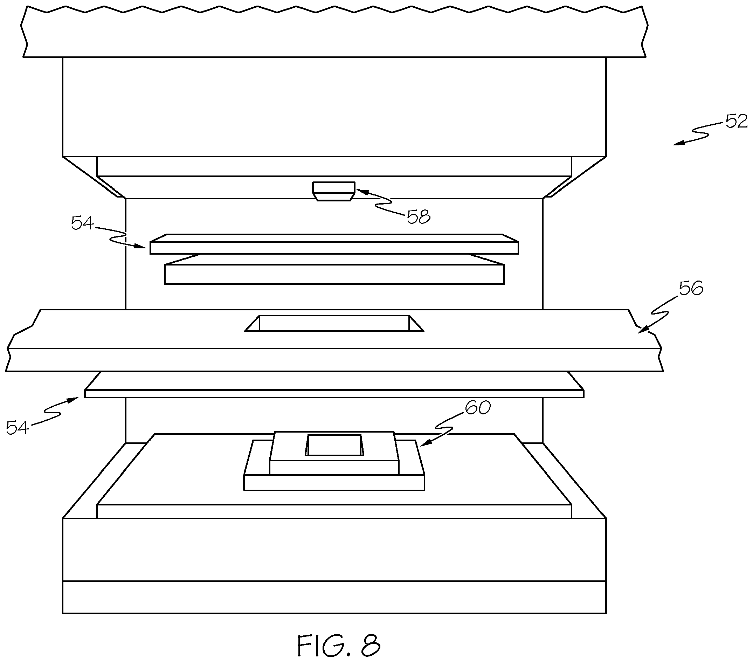

FIG. 8 is schematic of an exemplary thermoformer with infrared (IR) heaters used for thermoforming of microcapillary sheeting.
FIGS. 9(a)-(c) are photographs and optical microscope images for thermoforming a polypropylene microcapillary sheeting sample with a thickness of 30 mils reheated at a heater temperature of 220 °C for 20 seconds. FIG. 9(a) is a photograph of the thermoformed polypropylene microcapillary sheeting sample. FIG. 9(b) is an optical microscopic image before thermoforming. FIG. 9(c) are optical microscopic images at different locations of the thermoformed sample, as indicated in FIG. 9(a).
FIGS. 10(a)-(c) are photographs and optical microscope images for thermoforming a polypropylene microcapillary sheeting sample with a thickness of 19 mils reheated at a heater temperature of 220 °C for 30 seconds. FIG. 10(a) is a photograph of the thermoformed polypropylene microcapillary sheeting sample. FIG. 10(b) is an optical microscopic image before thermoforming. FIG. 10(c) are optical microscopic images at different locations of the thermoformed sample, as indicated in FIG. 10(a).
FIGS. 11(a)-(C) are photographs and optical microscope images for thermoforming a polyethylene microcapillary sheeting sample with a thickness of 30 mils reheated at a heater temperature of 220 °C for 20 seconds. FIG. 11(a) is a photograph of the thermoformed polypropylene microcapillary sheeting sample. FIG. 11(b) is an optical microscopic image before thermoforming. FIG. 11(c) are optical microscopic images at different locations of the thermoformed sample, as indicated in FIG. 11(a).

### DETAILED DESCRIPTION

Reference will now be made in detail to various embodiments of the instantly-disclosed thermoformed microcapillary sheeting. The thermoformed microcapillary sheeting can be used in lightweighting applications. Even more particularly, the thermoformed microcapillary sheeting can be used in lightweighting packaging applications such as rigid or flexible packaging products. The thermoformed microcapillary sheeting exhibits improved optical clarity and mechanical properties as compared to alternative thermoformed structures for lightweighting applications, such as thermoformed foam structures.

Unless otherwise indicated, the disclosure of any ranges in the specification and claims are to be understood as including the range itself and also anything subsumed therein, as well as endpoints. Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

In various embodiments, a thermoformed microcapillary sheeting is provided. The term "thermoplastic sheeting" as used herein refers to sheeting as well as films. The thermoformed microcapillary sheeting is prepared by a process comprising the steps of: (a) providing a thermoplastic sheeting comprising thermoplastic material, wherein the thermoplastic sheeting comprises at least one or more microcapillary channel disposed therein, the at least one or more microcapillary channels having an initial volume based on a total volume of the thermoplastic sheeting; and (b) heating the thermoplastic sheeting to a temperature at which the thermoplastic material is deformable to form a thermoformed microcapillary sheeting with the at least one or more microcapillary channels disposed therein, the at least one or more microcapillary channels having a final volume of voidage based on a total volume of the thermoformed microcapillary sheeting. The final volume of voidage of the at least one or more microcapillary channels of the thermoformed microcapillary sheeting is at least 10 percent of the initial volume of voidage of the at least one or more microcapillary channels of the thermoplastic sheeting.

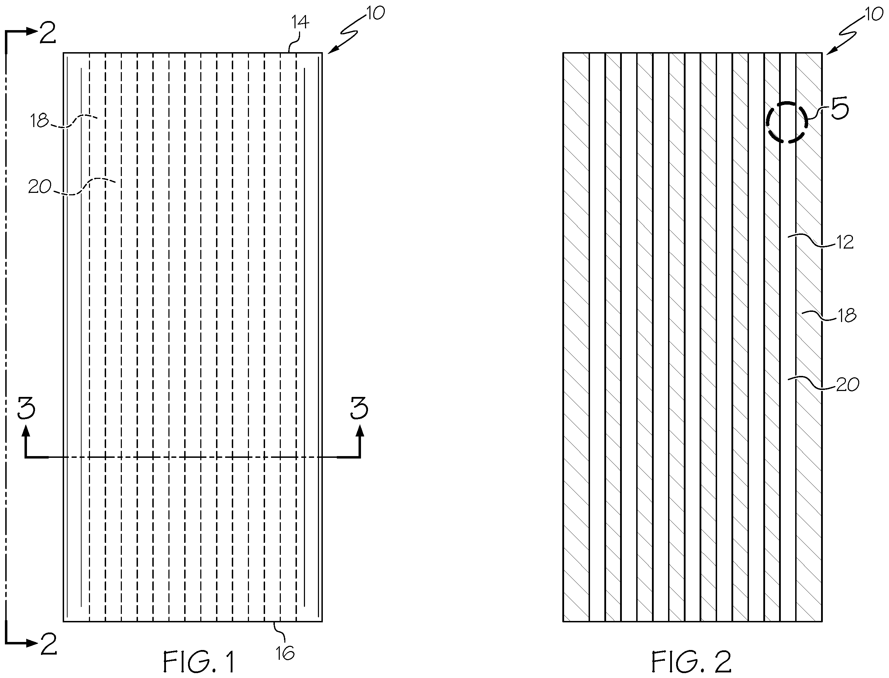

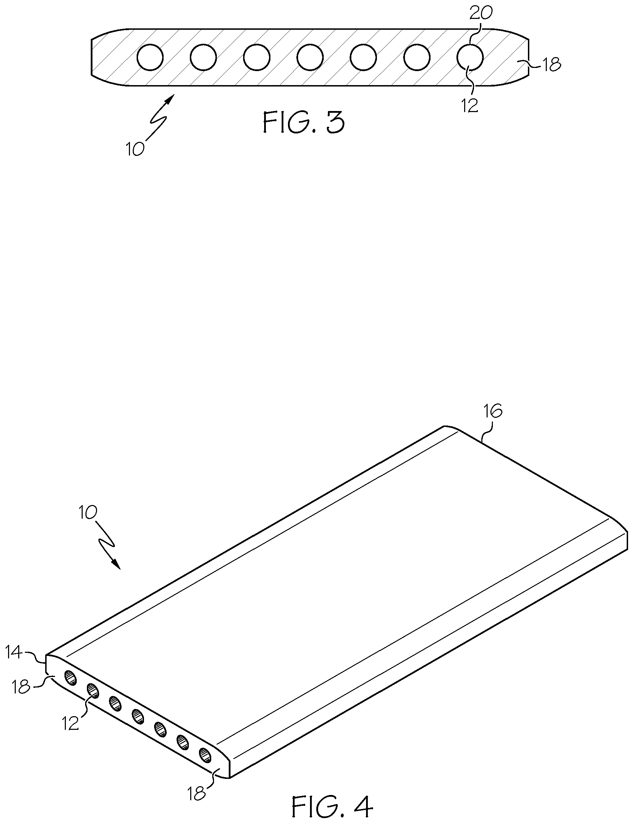

Referring now to FIGS. 1-4, wherein like numerals indicate like elements, an exemplary thermoplastic sheeting (**10**) has a first end (**14**) and a second end (**16**), and can include a first thermoplastic material (**18**). The thermoplastic sheeting can include at least one or more microcapillary channels (**20**) disposed therein. As depicted, the at least one or more microcapillary channels can extend from the first end (**14**) to the second end (16**)** of the thermoplastic sheeting (**10**). The microcapillary channels (**20**) can be arrayed across the sheeting width and extend the length of the sheeting in the flow direction. In certain embodiments, the provided thermoplastic sheeting includes more than one microcapillary channel (**20**). In such embodiments, the microcapillary channels can be disposed in parallel, as depicted in FIGS. 1-4. The term "parallel" as used herein means extending in the same direction and never intersecting. In further embodiments of the thermoplastic sheeting including more than one microcapillary channel (**20**), the microcapillary channels are at least 1 µm apart from each other. After heating the thermoplastic sheeting (**10**) to a temperature at which thermoplastic material is deformable to form the thermoformed microcapillary sheeting, the direction and spacing of the microcapillary channels remains essentially the same.

The thermoplastic sheeting (**10**) with at least one or more microcapillary channel (**20**) disposed therein, as well as the thermoformed microcapillary sheeting, may have a thickness in the range of from about 0.5 mm to about 60 mm according to ASTM D374M-13. In some embodiments, the thermoplastic sheeting (**10**), as well as the thermoformed microcapillary sheeting, may have a thickness in the range of from about 1 mm to about 50 mm according to ASTM D374M-13. In other embodiments, the thermoplastic sheeting (**10**), as well as the thermoformed microcapillary sheeting, may have a thickness in the range of from about 1 mm to about 40 mm according to ASTM D374M-13. Further exemplary ranges of the thermoplastic sheeting thickness and the thermoformed microcapillary sheeting thickness include from about 2 mm to about 35 mm, from about 2 mm to about 30 mm, from about 3 mm to about 25 mm, and from 3 mm to 20 mm according to ASTM D374M-13. The thermoplastic sheeting thickness to microcapillary diameter ratio, as well as the thermoformed microcapillary sheeting thickness to microcapillary diameter ratio, can be in the range of from about 1:1 to 100:1.

The thermoplastic sheeting (**10**) with at least one or more microcapillary channels (**20**) disposed therein may include at least about 10 percent by volume of the thermoplastic material (**11**), based on the total volume of the thermoplastic sheeting (**10**). In some embodiments, the thermoplastic sheeting (**10**) may comprise from about 10 to about 90 percent by volume of thermoplastic material (**18**), based on the total volume of the microcapillary sheeting (**10**). In other embodiments, the thermoplastic sheeting (**10**) may comprise from about 20 to about 80 percent by volume of the thermoplastic sheeting (**10**), based on the total volume of the thermoplastic sheeting (**10**). In further embodiments, the thermoplastic sheeting (**10**) may comprise from about 30 to about 80 percent by volume of the thermoplastic material (**18**), based on the total volume of the thermoplastic sheeting (**10**). In further embodiments, the thermoplastic sheeting (**10**) may comprise from about 50 to about 85 percent by volume of the thermoplastic material (**18**), based on the total volume of the thermoplastic sheeting (**10**).

The one or more microcapillary channels (**20**) may comprise from about 5 percent to about 80 percent by volume of the total volume of the thermoplastic sheeting (**10**). In other embodiments, the one or more microcapillary channels (**20**) may comprise from about 10 to about 70 percent by volume of the total volume of the thermoplastic sheeting (**10**). In further embodiments, the one or more microcapillary channels (**20**) may comprise from about 10 to about 60 percent by volume of the total volume of the thermoplastic sheeting (**10**). Alternatively, the one or more microcapillary channels (**20**) may comprise from about 15 to about 50 percent by volume of the total volume of the thermoplastic sheeting (**10**). After heating the thermoplastic sheeting (**10**) to a temperature at which the thermoplastic material is deformable to form the thermoformed microcapillary sheeting, the at least one or more microcapillary channel of the thermoformed microcapillary sheeting has a final volume based on a total volume of the thermoformed microcapillary sheeting. In some embodiments, the final volume of the at least one or more microcapillary channels of the thermoformed microcapillary sheeting is at least about 10 percent of the initial volume of the at least one or more microcapillary channels of the thermoplastic sheeting. In other embodiments, the final volume of the at least one or more microcapillary channels of the thermoformed microcapillary sheeting is at least 20 percent of the initial volume of the at least one or more microcapillary channels of the thermoplastic sheeting. In other embodiments, the final volume of the at least one or more microcapillary channels of the thermoformed microcapillary sheeting is at least 20 percent, at least about 30 percent, at least about 40 percent, at least about 50 percent, at least about 60 percent, at least about 70 percent, at least about 80 percent, or at least about 90 percent of the initial volume of the at least one or more microcapillary channels of the thermoplastic sheeting.

In some embodiments, the at least one or more microcapillary channels (**20**) of both the thermoplastic sheeting (**10**) and the thermoformed microcapillary sheeting can be filled with a gas. In certain embodiments, the at least one or more microcapillary channels (**20**) can be filled with air. In other embodiments, the at least one or more microcapillary channels (**20**) can be filled with an inert gas.

In some embodiments, the at least one or more microcapillary channels (**20**) of both the thermoplastic sheeting (**10**) and the thermoformed microcapillary sheeting have a diameter of at least 1 µm. The term "diameter" as used herein means the longest axis of the microcapillary channel (**20**) cross section. In some embodiments, the at least one or more microcapillary channels (**20**) have a diameter of at least about 1 µm. In other embodiments, the at least one or more microcapillary channels (**20**) have a diameter of from about 1 µm to about 2000 µm. In further embodiments, the at least one or more microcapillary channels (**20**) have a diameter of from about 5 µm to about 1200 µm. Further exemplary ranges of the one or more microcapillary channels diameter include from about 100 µm to about 400 µm, from about 500 µm to about 1200 µm, and from 700 µm to about 1200 µm.

The at least one or more microcapillary channels (**20**) of both the thermoplastic sheeting (**10**) and the thermoformed microcapillary sheeting can have an aspect ratio in the range of about 1:1 to about 100:1 as measured as the ratio of longest to shortest dimensions of a channel's cross-section perpendicular to the machine direction of the sheeting. In some embodiments, the at least one or more microcapillary channels (**20**) can have an aspect ratio in the range of about 10:1 to about 100:1 as measured as the ratio of longest to shortest dimensions of a channel's cross-section perpendicular to the machine direction of the sheeting. In other embodiments, at least one or more microcapillary channels (**20**) can have an aspect ratio in the range of about 1:1 to about 50:1 as measured as the ratio of longest to shortest dimensions of a channel's cross-section perpendicular to the machine direction of the sheeting. In further embodiments, at least one or more microcapillary channels (**20**) can have an aspect ratio in the range of about 10:1 to about 50:1 as measured as the ratio of longest to shortest dimensions of a channel's cross-section perpendicular to the machine direction of the sheeting.

The at least one or more microcapillary channels (**20**) of both the thermoplastic sheeting (**10**) and the thermoformed microcapillary sheeting can have a cross sectional shape selected from the group consisting of circular, rectangular, oval, star, diamond, triangular, square, curvilinear, and combinations thereof. The one or more microcapillary channels (**20**) may further include one or more seals at the first end (**14**), the second end (**16**), therebetween the first point (**14**) and the second end (**16**), and/or combinations thereof.

The thermoplastic material (**11**) can include, but is not limited to, polyolefins, polyamides, polyvinylidene chloride, polyvinylidene fluoride, polycarbonate, polystyrene, polyethylene terephthalate, polyurethane, and polyester. The thermoplastic material (**18**) may be reinforced via, for example, glass or carbon fibers and/or any other mineral fillers such talc or calcium carbonate

In some embodiments, the thermoplastic material can comprise polyolefins, olefin copolymers, and mixtures thereof. In certain embodiments, the polyolefins are selected from the group consisting of polypropylene, polyethylene, polybutene, polymethylpentene, and mixtures thereof.

In some embodiments, the polyethylene is characterized by having a melt index in the range of about 0.1 to about 500 g/10 minutes when measured at 190 °C and 2.16 Kg according to ASTM D1238. In other embodiments, the polyethylene is characterized by having a melt index in the range of about 5.0 to about 30 g/10 minutes when measured at 190 °C and 2.16 Kg according to ASTM D1238. In even further embodiments, the polyethylene is characterized by having a melt index in the range of about 1 to about 15 g/10 minutes when measured at 190 °C and 2.16 Kg according to ASTM D1238. Further exemplary polyethylenes are characterized by having a melt index in the range of about 1 to about 10 g/10 minutes or from about 2 to about 7 g/10 minutes when measured at 190 °C and 2.16 Kg according to ASTM D1238. In some embodiments, the polyethylene can be a low density polyethylene (LDPE) having a density from about 0.9225 to about 0.9275 g/cm³ according to ASTM D792 and a melt index in the range of about 5.3-7.5 g/10 min when measured at 190 °C and 2.16 Kg according to ASTM D1238. In other embodiments, the polyethylene can be a linear low density polyethylene (LLDPE) having a density from about 0.923 to about 0.927 g/cm³ according to ASTM D792 and a melt index in the range of about 1.7-2.3 g/10 min when measured at 190 °C and 2.16 Kg according to ASTM D1238. In certain embodiments, the polyethylene comprises a blend of linear low density polyethylene and low density polyethylene.

In some embodiments, the polypropylene is characterized by having a melt index in the range of about 0.1 to about 500 g/10 minutes when measured at 230 °C and 2.16 Kg according to ASTM D1238. In other embodiments, the polypropylene is characterized by having a melt index in the range of about 2 to about 60 g/10 minutes when measured at 230 °C and 2.16 Kg according to ASTM D1238. In even further embodiments, the polypropylene is characterized by having a melt index in the range of about 2 to about 30 g/10 minutes when measured at 230 °C and 2.16 Kg according to ASTM D1238. Further exemplary polypropylenes are characterized by having a melt index in the range of about 2 to about 20 g/10 minutes or from about 5 to about 15 g/10 minutes when measured at 230 °C and 2.16 Kg according to ASTM D1238. In some embodiments, the polypropylene can be a thermoforming grade polypropylene having a density of about 0.9 g/cm³ according to ASTM D792 and a melt index in the range of about 2.0 g/10 min when measured at 230 °C and 2.16 Kg according to ASTM D1238.

In other embodiments, the olefin copolymers are selected from the group consisting of ethylene-propylene copolymers, ethylene-butene copolymers, ethylene-hexene copolymers, ethylene-octene copolymers, ethylene-methacrylate copolymers, ethylene-vinyl acetate copolymers, and mixtures thereof.

Examples of the thermoplastic material (**11**) include, but are not limited to, homopolymers and copolymers (including elastomers) of one or more alpha-olefins such as ethylene, propylene, 1-butene, 3-methyl-1-butene, 4-methyl-1-pentene, 3-methyl-1-pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene-1-butene copolymer; copolymers (including elastomers) of an alpha-olefin with a conjugated or non-conjugated diene, as typically represented by ethylene-butadiene copolymer and ethylene-ethylidene norbornene copolymer; and polyolefins (including elastomers) such as copolymers of two or more alpha-olefins with a conjugated or non-conjugated diene, as typically represented by ethylene-propylene-butadiene copolymer, ethylene-propylene-dicyclopentadiene copolymer, ethylene-propylene-1,5-hexadiene copolymer, and ethylene-propylene-ethylidene norbornene copolymer; ethylene-vinyl compound copolymers such as ethylene-vinyl acetate copolymer, ethylene-vinyl alcohol copolymer, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, α-methylstyrene-styrene copolymer, styrene vinyl alcohol, styrene acrylates such as styrene methylacrylate, styrene butyl acrylate, styrene butyl methacrylate, and styrene butadienes and crosslinked styrene polymers; and styrene block copolymers (including elastomers) such as styrenebutadiene copolymer and hydrate thereof, and styrene-isoprene-styrene triblock copolymer; polyvinyl compounds such as polyvinyl chloride, polyvinylidene chloride, vinyl chloride-vinylidene chloride copolymer, polyvinylidene fluoride, polymethyl acrylate, and polymethyl methacrylate; polyamides such as nylon 6, nylon 6,6, and nylon 12; thermoplastic polyesters such as polyethylene terephthalate and polybutylene terephthalate; polyurethane, polycarbonate, polyphenylene oxide, and the like; and glassy hydrocarbon-based resins, including poly-dicyclopentadiene polymers and related polymers (copolymers, terpolymers); saturated mono-olefins such as vinyl acetate, vinyl propionate, vinyl versatate, and vinyl butyrate and the like; vinyl esters such as esters of monocarboxylic acids, including methyl acrylate, ethyl acrylate, n-butyl acrylate, isobutyl acrylate, 2-ethylhexyl acrylate, dodecyl acrylate, n-octyl acrylate, phenyl acrylate, methyl methacrylate, ethyl methacrylate, and butyl methacrylate and the like; acrylonitrile, methacrylonitrile, acrylamide, mixtures thereof; resins produced by ring opening metathesis and cross metathesis polymerization and the like. These resins may be used either alone or in combinations of two or more. The thermoplastic material can also be polycarbonate, polystyrene, acrylonitrile butadiene styrene, poly(vinyl chloride), poly(ethylene terephthalate), polylactic acid, poly(ethylene vinylalcohol), polyamide, polyvinylidene chloride, and polyvinylidene fluoride.

In certain embodiments, the thermoplastic material may, for example, comprise one or more polyolefins selected from the group consisting of ethylene-alpha olefin copolymers, propylene-alpha olefin copolymers, and olefin block copolymers. In particular, in select embodiments, the first thermoplastic materials may comprise one or more non-polar polyolefins.

In some embodiments, polyolefins such as polypropylene, polyethylene, copolymers thereof, and blends thereof, as well as ethylene-propylene-diene terpolymers, may be used. In some embodiments, exemplary olefinic polymers include homogeneous polymers; high density polyethylene (HDPE); heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers; and high pressure, free radical polymerized ethylene polymers and copolymers such as low density polyethylene (LDPE) or ethylene vinyl acetate polymers (EVA).

As stated above, in one embodiment, the ethylene-alpha olefin copolymer may, for example, be ethylene-butene, ethylene-hexene, or ethylene-octene copolymers or interpolymers. In other particular embodiments, the propylene-alpha olefin copolymer may, for example, be a propylene-ethylene or a propylene-ethylene-butene copolymer or interpolymer.

In certain other embodiments, the thermoplastic material may, for example, be a semi-crystalline polymer and may have a melting point of less than 110 °C. In another embodiment, the melting point may be from 25 to 100 °C. In another embodiment, the melting point may be between 40 and 85 °C.

In one embodiment, the thermoplastic material is a propylene/α-olefin interpolymer composition comprising a propylene/alpha-olefin copolymer, and optionally one or more polymers, e.g. a random copolymer polypropylene (RCP). In one particular embodiment, the propylene/alpha-olefin copolymer is characterized as having substantially isotactic propylene sequences. "Substantially isotactic propylene sequences" means that the sequences have an isotactic triad (mm) measured by 13C NMR of greater than about 0.85; in the alternative, greater than about 0.90; in another alternative, greater than about 0.92; and in another alternative, greater than about 0.93. Isotactic triads are well-known in the art and are described in, for example, U.S. Pat. No. 5,504,172 and International Publication No. WO 00/01745, which refer to the isotactic sequence in terms of a triad unit in the copolymer molecular chain determined by 13C NMR spectra.

The propylene/alpha-olefin copolymer may have a melt flow rate in the range of from 0.1 to 500 g/10 minutes, measured in accordance with ASTM D-1238 (at 230° C./2.16 Kg). All individual values and subranges from 0.1 to 500 g/10 minutes are included herein and disclosed herein; for example, the melt flow rate can be from a lower limit of 0.1 g/10 minutes, 0.2 g/10 minutes, or 0.5 g/10 minutes to an upper limit of 500 g/10 minutes, 200 g/10 minutes, 100 g/10 minutes, or 25 g/10 minutes. For example, the propylene/alpha-olefin copolymer may have a melt flow rate in the range of from 0.1 to 200 g/10 minutes; or in the alternative, the propylene/alpha-olefin copolymer may have a melt flow rate in the range of from 0.2 to 100 g/10 minutes; or in the alternative, the propylene/alpha-olefin copolymer may have a melt flow rate in the range of from 0.2 to 50 g/10 minutes; or in the alternative, the propylene/alpha-olefin copolymer may have a melt flow rate in the range of from 0.5 to 50 g/10 minutes; or in the alternative, the propylene/alpha-olefin copolymer may have a melt flow rate in the range of from 1 to 50 g/10 minutes; or in the alternative, the propylene/alpha-olefin copolymer may have a melt flow rate in the range of from 1 to 40 g/10 minutes; or in the alternative, the propylene/alpha-olefin copolymer may have a melt flow rate in the range of from 1 to 30 g/10 minutes.

The propylene/alpha-olefin copolymer can have a crystallinity in the range of from at least 1 percent by weight (a heat of fusion of at least 2 Joules/gram) to 30 percent by weight (a heat of fusion of less than 50 Joules/gram). All individual values and sub ranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method. The propylene/alpha-olefin copolymer comprises units derived from propylene and polymeric units derived from one or more alpha-olefin comonomers. Exemplary comonomers utilized to manufacture the propylene/alpha-olefin copolymer are C₂, and C₄ to C₁₀ alpha-olefins; for example, C₂, C₄, C₆ and C₈ alpha-olefins.

The propylene/alpha-olefin copolymer comprises from 1 to 40 percent by weight of one or more alpha-olefin comonomers. All individual values and sub ranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin copolymer has a molecular weight distribution (MWD), defined as weight average molecular weight divided by number average molecular weight (Mw/Mn) of 3.5 or less; in the alternative 3.0 or less; or in another alternative from 1.8 to 3.0.

Such propylene/alpha-olefin copolymers are further described in details in the U.S. Pat. Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™.

In one embodiment, the propylene/alpha-olefin copolymers are further characterized as comprising (A) between 60 and less than 100, or between 80 and 99 and more or between 85 and 99, weight percent units derived from propylene, and (B) between greater than zero and 40, or between 1 and 20, more or between 4 and 16 and even more or between 4 and 15, weight percent units derived from at least one of ethylene and/or a C₄₋₁₀ α-olefin; and containing an average of at least 0.001, or an average of at least 0.005 and more or an average of at least 0.01, long chain branches/1000 total carbons. The maximum number of long chain branches in the propylene/alpha-olefin copolymer is not critical, but typically it does not exceed 3 long chain branches/1000 total carbons. The term long chain branch, as used herein with regard to propylene/alpha-olefin copolymers, refers to a chain length of at least one (1) carbon more than a short chain branch, and short chain branch, as used herein with regard to propylene/alpha-olefin copolymers, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in details in the U.S. Provisional Patent Application No. 60/988,999 and International Patent Application No. PCT/US08/082599.

In certain other embodiments, the thermoplastic material (**11**), e.g. propylene/alpha-olefin copolymer, may, for example, be a semi-crystalline polymer and may have a melting point of less than 110 °C. In preferred embodiments, the melting point may be from 25 to 100 °C. In more preferred embodiments, the melting point may be between 40 and 85 °C.

In some embodiments, the thermoplastic material (**11**) of the thermoplastic sheeting (**10**) can be reinforced by, for example, glass or carbon fibers and/or any other mineral fillers such talc or calcium carbonate. Exemplary fillers include, but are not limited to, natural calcium carbonates, including chalks, calcites and marbles, synthetic carbonates, salts of magnesium and calcium, dolomites, magnesium carbonate, zinc carbonate, lime, magnesia, barium sulphate, barite, calcium sulphate, silica, magnesium silicates, talc, wollastonite, clays and aluminum silicates, kaolins, mica, oxides or hydroxides of metals or alkaline earths, magnesium hydroxide, iron oxides, zinc oxide, glass or carbon fiber or powder, wood fiber or powder or mixtures of these compounds.

The provided thermoplastic sheeting (**10**) with at least one or more microcapillary channel (**20**) disposed therein can be produced by extrusion apparatuses and methods known in the art. An exemplary extrusion apparatus and method is disclosed in WO 2014/003761 which discloses the preamble of claim 1.

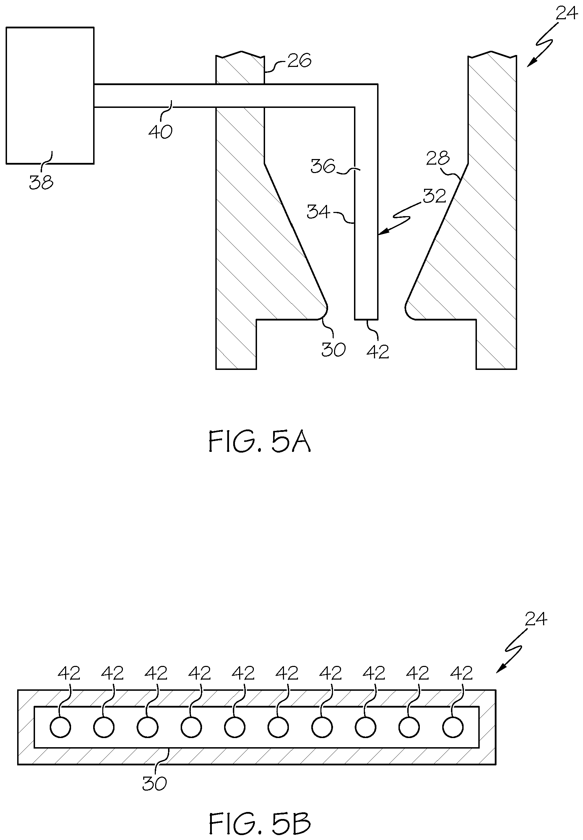

Additionally, an extrusion apparatus can include screw extruder driven by a motor. The thermoplastic material is melted and conveyed to a die (**24**), as shown in FIGS. 5a and 5b. The molten thermoplastic material passes through die (**24**), as shown in FIGS. 5a and 5b, and is formed into the desired shape and cross section. Referring to FIGS. 5a and 5b, die (**24**) includes an entry portion (**26**), a convergent portion (**28**), and an orifice (**30**), which has a predetermined shape. The molten thermoplastic polymer enters entry portion (**26**) of the die (**24**), and is gradually shaped by the convergent portion (**28**) until the melt exits the orifice (**30**). The die (**24**) further includes injectors (**32**). Each injector (**32**) has a body portion (**34**) having a conduit (**36**) therein which is fluidly connected to a gas source (**38**) by means of second conduit (**40**) passing through the walls of die (**24**) around which the molten thermoplastic material must flow to pass the orifice (**30**). The injector (**30**) further includes an outlet (**42**). The injector (**32**) is arranged such that the outlet (**42**) is located within the orifice (**30**). As the molten thermoplastic polymer exits the die orifice (**30**), one or more gases, e.g. air or an inert gas (**12**) is injected into the molten thermoplastic material thereby forming microcapillaries filled with one or more gases, e.g. air or an inert gas (**12**). In some embodiments, one or more gases, e.g. air or an inert gas (**12**) is continuously injected into the molten thermoplastic material thereby forming microcapillaries filled with one or more gases, e.g. air or an inert gas (**12**). In another embodiment, one or more gases, e.g. air or an inert gas (**12**) is intermittently injected and sealed into the molten thermoplastic material thereby forming microcapillaries filled with one or more gases, e.g. air or an inert gas (**12**) segments and void segments.

Thermoforming represents an important process to shape plastic sheeting into rigid or flexible packaging products. In lightweighting applications of microcapillary sheeting for Ziploc containers, food service trays, household goods, and packaging materials for transportation, electronics and building materials, the specific articles must have certain dimension and shape configuration. Therefore, potential thermoforming of microcapillary sheeting to make these products will expand the horizons of microcapillary technology. However, after the sheeting casting process, there is no air pressure inside the microcapillaries of the provided thermoplastic microcapillary sheeting, making it very difficult to maintain the microcapillaries in a thermoformed product. The presently-disclosed thermoformed microcapillary sheeting is produced by heating the provided thermoplastic microcapillary sheeting within a certain temperature window. By heating the provided thermoplastic microcapillary sheeting within a certain temperature window, the volume and structure of the air or gas filled microcapillaries in the thermoplastic sheeting is maintained in the thermoformed product. In some embodiments, the thermoplastic sheeting to a temperature at which the thermoplastic material is deformable. In some embodiments, the thermoplastic microcapillary sheeting is heated and subsequently formed into the thermoformed microcapillary sheeting using solid phase pressure forming. In other embodiments, the thermoplastic microcapillary sheeting is heated and subsequently formed into the thermoformed microcapillary sheeting using melt phase forming.

In some embodiments, the thermoplastic microcapillary sheeting is heated and subsequently formed into the thermoformed microcapillary sheeting using solid phase pressure forming. Solid phase pressure forming utilizes a higher forming pressure, e.g. greater than 5 bars, which allows the thermoplastic microcapillary sheeting to be formed at a temperature which is below the melting point of the thermoplastic material. At these temperatures, the thermoforming process imparts molecular orientation to the thermoplastic material, which can result in increased optical clarity of the thermoplastic material. This orientation also results in an increase in part stiffness, e.g. crush resistance, and tensile strength, which allows for reduction in part weight and thickness.

In certain embodiments using solid phase forming and wherein the thermoplastic material of the thermoplastic sheeting is a semi-crystalline polymer (e.g. polyethylene, polypropylene, or mixtures thereof), the thermoplastic sheeting is heated above the deflection temperature or Vicat softening temperature, but below the melting temperature, of the semi-crystalline polymer. In some embodiments, the thermoplastic sheeting is heated to a temperature that is from about 0°C to about 10°C lower than the melting temperature of the thermoplastic sheeting. In other embodiments, the thermoplastic sheeting is heated to a temperature that is within about 5°C to about 10°C lower than the melting temperature of the thermoplastic sheeting. In even further embodiments, the thermoplastic sheeting is heated to a temperature that is within about 0°C to about 5°C lower than the melting temperature of the thermoplastic sheeting.

In other embodiments using melt phase thermoforming and wherein the thermoplastic material of the thermoplastic sheeting is a semi-crystalline polymer (e.g. polyethylene, polypropylene, or mixtures thereof), the thermoplastic sheeting is heated above the melting temperature of the semi-crystalline polymer. In some embodiments, the thermoplastic sheeting with high melt strength is heated to a temperature that is from about 0°C to about 20°C higher than the melting temperature of the thermoplastic sheeting.

In other embodiments wherein the thermoplastic material of the thermoplastic sheeting is an amorphous polymer (e.g. polystyrene, acrylic, polycarbonate, or mixtures thereof), the thermoplastic sheeting is heated above the glass transition temperature of the amorphous polymer. In some embodiments wherein the thermoplastic material of the thermoplastic sheeting is an amorphous polymer ((e.g. polystyrene, acrylic, polycarbonate, or mixtures thereof), the thermoplastic sheeting is heated to a temperature that is at least about 20 °C above the glass transition temperature of the amorphous polymer.

As previously described, the provided thermoplastic sheeting comprises at least one or more microcapillary channel disposed therein, the at least one or more microcapillary channel having an initial volume based on a total volume of the thermoplastic sheeting. After heating the thermoplastic sheeting to a temperature at which the thermoplastic material is deformable, as previously described, the thermoformed microcapillary sheeting is formed. The resulting thermoformed microcapillary sheeting comprises at least one or more microcapillary channels disposed therein, the at least one or more microcapillary channels having a final volume based on a total volume of the thermoformed microcapillary sheeting. In some embodiments, the final volume of the at least one or more microcapillary channels of the thermoformed microcapillary sheeting is at least about 10 percent of the initial volume of the at least one or more microcapillary channels of the thermoplastic sheeting. In other embodiments, the final volume of the at least one or more microcapillary channels of the thermoformed microcapillary sheeting is at least about 20 percent of the initial volume of the at least one or more microcapillary channels of the thermoplastic sheeting. In other embodiments, the final volume of the at least one or more microcapillary channels of the thermoformed microcapillary sheeting is at least 20 percent, at least about 30 percent, at least about 40 percent, at least about 50 percent, at least about 60 percent, at least about 70 percent, at least about 80 percent, or at least about 90 percent of the initial volume of the at least one or more microcapillary channels of the thermoplastic sheeting.

The process for forming the presently-disclosed thermoformed microcapillary sheeting and articles can utilize different draw ratios. The draw ratio is the ratio of the surface area of the thermoformed sheeting or article to the footprint of the thermoformed sheeting or article. The term "footprint" as used herein is the surface space occupied by the thermoformed sheeting or article. In some embodiments, the presently disclosed thermoformed microcapillary sheeting or articles are prepared by a process that utilizes a minimum draw ratio of about 1.1. In other embodiments, the presently disclosed thermoformed microcapillary sheeting or articles are prepared by a process that utilizes a draw ratio of about 1.1 to about 2.0. In some embodiments, the presently disclosed thermoformed microcapillary sheeting or articles are prepared by a process that utilizes a maximum draw ratio of about 3.0.

The thermoformed microcapillary sheeting according to the present disclosure may be included or used for multilayer structure, for example, a laminated multilayer structure or a coextruded multilayer structure. Additionally, the presently-disclosed thermoformed microcapillary sheeting can be included or used in various articles, such as articles in packaging applications. These articles can include, but not limited to, home and food storage bags (e.g. Ziploc containers), food service trays, household goods, and packaging materials for transportation, electronics, and building materials.

In order that various embodiments may be more readily understood, reference is made to the following examples which are intended to illustrate various embodiments, but do not limit the scope thereof.

### Example 1: Microcapillary Sheeting Extrusion

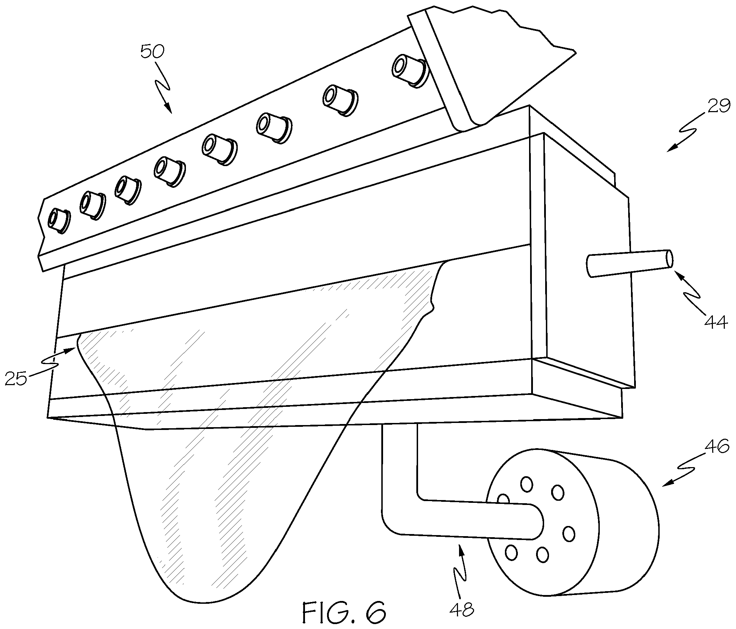

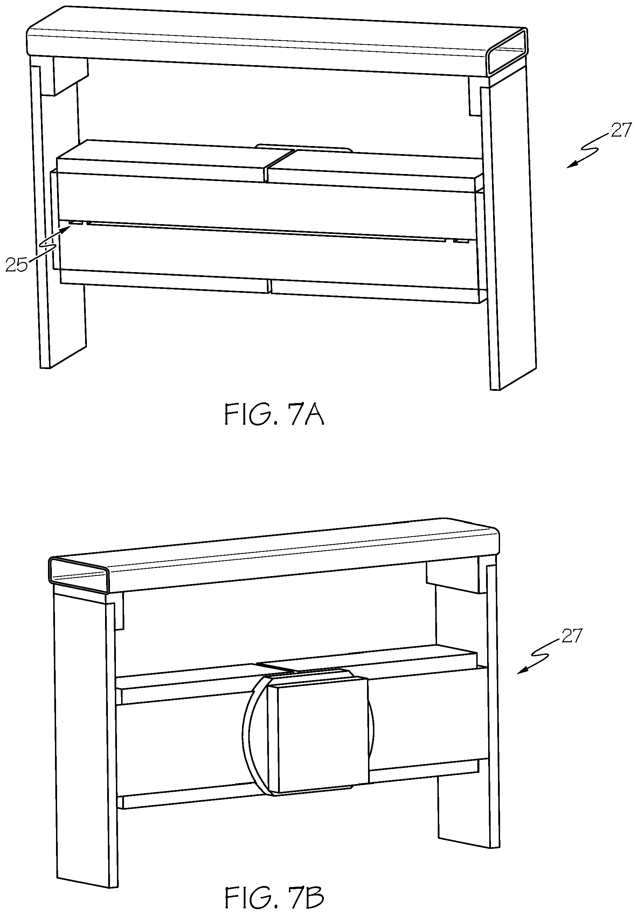

A 24-inch wide microcapillary die (**25**) (FIG. 6) was retrofitted into a pilot-scale sheeting casting line by using a designed frame (**27**), as indicated in FIGS. 7A and 7B. Specifically, this die consisted (**25**) of 532 microcapillary pins and each microcapillary pin had an outer diameter of 0.38 mm and an inner diameter of 0.19 mm. A schematic of the microcapillary sheeting extrusion line (**29**) is given in FIG. 6. Essentially, this line consisted of a 2.5" Killion single-screw extruder (**46**), a transfer line (**48**) to transport the polymer melt, a microcapillary die (**25**) to shape the sheeting, an air knife (**50**), and a rollstack with chill rolls to solidify the extruded sheeting and a winder to wind the sheeting. The plant air was supplied by an air line (**44**) with a flow meter (FIG. 6), and was widely opened prior to heating the machine to prevent the blockage of microcapillary pins by the backflow of polymer melt.

The typical experimental protocol for making microcapillary sheeting is as follows. First, the extruder, transfer lines and die were heated to the operating temperatures with a sufficient "soak" time. The representative extrusion temperature profiles for making polyethylene and polypropylene microcapillary sheeting are given in Table 1. As the polymer pellets passed through the extruder screw the polymer was melted and transported to the microcapillary die by a transfer line (FIG. 6). Then, the polymer melt was separated into two streams and passed over the microcapillary pins injecting air into the melt, which maintained the size and shape of the microcapillary channels. Upon exiting the extrusion die, the extrudate was taken to a chill roll on the rollstack. The distance between the microcapillary die lip and chill roll was about 8 inches. The chill roll temperature was set to 55 °F for polyethylene microcapillary sheeting and 185 °F for polypropylene microcapillary sheeting. Once the extrudate was quenched, it was taken by a nip roll and wound by a tension winder. The air flow rate was carefully adjusted in such a way that the microcapillaries would maintain reasonable microcapillary dimensions. The line speed was controlled by the speed of the chill roll on the rollstack, ranging from 4 ft/min to 55 ft/min.

The polymer resin for polyethylene microcapillary sheeting with a thickness of 30 mils consisted of 60wt% LDPE-751A and 40wt% LLDPE-2083, while polypropylene microcapillary sheeting with two different thicknesses (30 and 19mils) were made of thermoforming grade polypropylene (PP-222). The processing conditions for making polyethylene and polypropylene microcapillary sheeting are summarized in Table 2.

LDPE-751A has a density of 0.923 g/cm³, a melt mass-flow rate (MFR) of 6.4 g/10 min @190 °C/2.16 kg, and a melting temperature of 112.8 °C. LLDPE-2083 (DOWLEX™ 2083G) has a density of 0.925 g/cm³, a melt mass-flow rate (MFR) of 2 g/10 min @ 190 °C/2.16 kg, and a melting temperature of 123.9 °C. PP-222 (Polypropylene INSPIRE™ 222) has a density of 0.9 g/cm³, a melt mass-flow rate (MFR) of 2 g/10 min @230 °C/2.16 kg, and a melting temperature of 160 °C and a deflection temperature of 112 °C.

**Table 1: Representative temperature profiles for producing polyethylene and polypropylene microcapillary sheeting.**

| **Materials** | **Extruder Zone 1 (°F)** | **Extruder Zone 2 (°F)** | **Extruder Zone 3 (°F)** | **Extruder Zone 4 (°F)** | **Adaptor Zone (°F)** | **Transfer Line (°F)** | **Screen Changer (°F)** | **Feed block (°F)** | **Die Zone (°F)** |
|---|---|---|---|---|---|---|---|---|---|
| Blended Polyethylene | 325 | 350 | 380 | 380 | 380 | 380 | 380 | 390 | 390 |
| Polypropylene | 400 | 410 | 420 | 420 | 420 | 420 | 420 | 420 | 420 |

**Table 2: Summary of experimental conditions for making polyethylene and polypropylene microcapillary sheeting (MCF).**

| **Samples** | **PE MCF** | **PP MCF-1** | **PP MCF-2** |
|---|---|---|---|
| Screw Speed (rpm) | 43 | 45 | 45 |
| Line Speed (ft/min) | 5 | 4 | 7 |
| Air Flow Rate (ml/min) | 100 | 100 | 150 |
| Pressure (psig) | 2900 | 2830 | 2860 |
| Chill Roll Temperatures (°F) | 55 | 185 | 185 |
| Sheeting Width (inch) | 21 | 17.7 | 17.5 |
| Average Sheeting Thickness (mil) | 30.2 | 29.5 | 19.6 |
| Microcapillary Voidage (%) | 19 | 16.6 | 36.3 |

### Example 2: Thermoformer

Infrared (IR) heaters (54) are placed on both sides of sheeting with an aim to obtain uniform heating in a quick manner. During the experiment, the IR heaters (**54**) were set to a predetermined temperature (e.g., 220 °C), and then the microcapillary sheeting were placed in between for a certain period of time. Upon the completion of reheating, the sheeting holder (**56**) was moved and located between the upper (**58**) and lower molds (**60**). After that, the upper (**58**) and lower (**60**) molds moved to each other immediately and clamped together to reach the preset pressure (e.g, 20 bar). Subsequently, the molds were open and then the sample was removed from the sample holder (**56**).

### Example 3: Thermoformed samples polypropylene microcapillary sheeting.

Table 3 summarizes the experimental observations and optical microscope images for thermoformed samples of 30 mils thick polypropylene microcapillary sheeting. It can be seen from Table 3 that at lower heater temperatures (e. g. 160 °C and 190 °C), the microcapillary sheeting could not completely replicate the mold and white cracks were formed at the corners of the thermoformed part. The same observations were made for samples reheated at a heater temperature of 220 °C for a short time (e.g., 10 seconds). As the reheating time increased further above 20 seconds for a heater temperature of 220 °C, thermoformed parts exhibiting a smooth surface without white cracks were obtained. More significantly, the microcapillaries could survive through the thermoforming pressure of 20 bars, and the dimension of microcapillaries had little change. However, when the reheating time was greater than 35 seconds, it was observed that the microcapillaries became smaller, presumably arising from the higher sheeting temperature and thus lower melt strength of the polymer.

**Table 3: Experimental observations and optical microscope images for thermoforming of polypropylene microcapillary sheeting with a thickness of 30 mils at a pressure of 20 bars under different reheating conditions.**

| Heater Temperature | Heating Time | Observation | Optical Microscope 500 µm | Sheet Temperature |
|---|---|---|---|---|
| 160 °C | 20 sec | White crack | 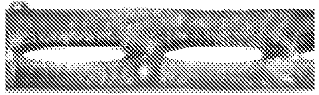 | 74.8 °C |
| 190 °C | 20 sec | Small white crack | 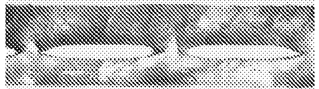 | 92.5 °C |
| 220 °C | 10 sec | Small white crack | 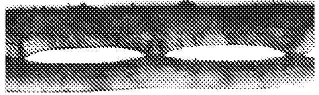 | 77.9 °C |
| 220 °C | 20 sec | No crack | 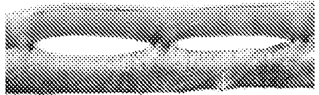 | 112.5 °C |
| 220 °C | 30 sec | Smooth Surface | 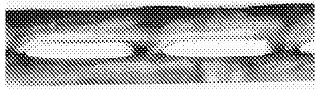 | 136.5 °C |
| 220 °C | 35 sec | Smooth Surface | 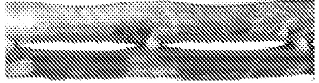 | 145.4 °C |

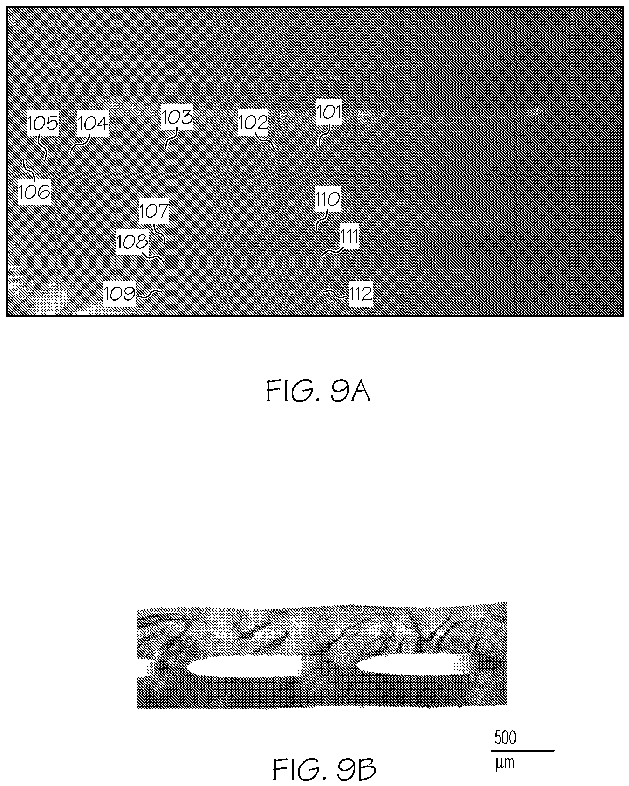

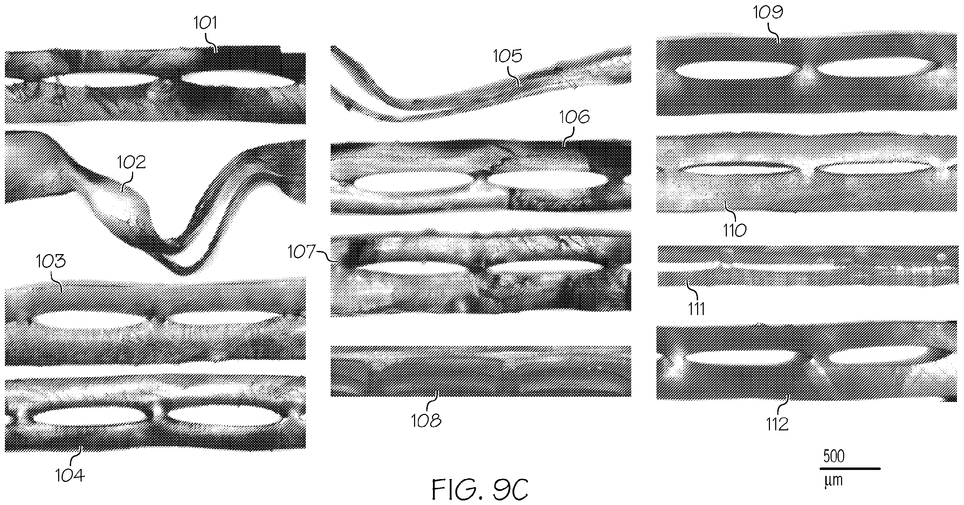

To investigate the dimensional change at different locations of the thermoformed part of 30 mil thick PP microcapillary sheeting prepared at a reheating of 220 °C and a reheating time of 20 seconds, 12 samples were cut from the various locations marked in the photograph of FIG. 9(a), which were then analyzed by optical microscopy. The corresponding optical microscope images were given in FIG. 9 for these samples. FIG. 9(b) is an optical microscopic image before thermoforming. FIG. 9(c) are optical microscopic images at different locations of the thermoformed sample, as indicated in FIG. 9(a). These optical microscope images depict that large deformation/collapse only occurred at the corner lines (locations **102, 105, 108, 111**) of the thermoformed part, and minor deformation happened at the side walls (locations **104, 107, 110**) of the part, while the center (locations **101, 103**) of the sample kept the original dimension of microcapillaries. For locations (**106**, **109, 112**) without deformation, their optical microscope images were very similar to that before thermoforming. Table 4 gives the comparison of volume of microcapillaries in the sheeting between before and after thermoforming for polypropylene microcapillary sheeting with a thickness of 30 mils reheated at a heater temperature of 220°C for 20 seconds. Specifically, the microcapillaries were deformed or collapsed at locations **102, 105, 108, 111,** and they became slightly smaller at locations **107** and **110.** The volume percentage of microcapillaries in the sheeting for all other locations showed little deviation from that before thermoforming.

**Table 4: Comparison of volume of microcapillary in the sheeting (in FIG. 9) between before and after thermoforming for polypropylene microcapillary sheeting with a thickness of 30 mils reheated at 220 °C for 20 seconds.**

| **Thermoforming of PP MCF (30 mil) at 220 °C for 20 sec** | |
|---|---|
| **Location** | **Volume of Microcapillary in the Sheeting (vol%)** |
| Before thermoforming | 16.6 |
| **101** | 16.9 |
| **102** | Deformed |
| **103** | 15.7 |
| **104** | 17.4 |
| **105** | Deformed |
| **106** | 17.4 |
| **107** | 14.5 |
| **108** | Deformed |
| **109** | 18.0 |
| **110** | 11.5 |
| **111** | Collapsed |
| **112** | 18.8 |

Furthermore, we investigated the thermoformability of polypropylene microcapillary sheeting with a thinner thickness but a larger microcapillary size. Polypropylene microcapillary sheeting was selected having a thickness of 19 mils and an volume percentage of microcapillaries in the sheeting of 36.3% before thermoforming. To optimize the thermoforming conditions, the IR heater temperature was fixed at 220 °C and the reheating time was varied from 10 to 30 seconds. It was found small white cracks were exhibited at a reheating time of 10 seconds, indicative of insufficient sheeting temperature for thermoforming. However, samples with smooth surfaces were prepared when the reheating time was greater than 15 seconds. The optical microscope images in Table 5 clearly demonstrate that the microcapillaries could be well retained in the thermoformed parts in the range of reheating times investigated. It should be noted that all the samples were thermoformed under the thermoforming pressure of 20 bars.

**Table 5: Experimental observations and optical microscope images for thermoforming of polypropylene microcapillary sheeting with a thickness of 19 mils at a pressure of 20 bars under different reheating conditions.**

| Heater Temperature | Heating Time | Observation | Optical Microscope 500 µm | Sheet Temperature |
|---|---|---|---|---|
| 220 °C | 10 sec | Small white crack | 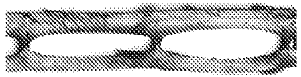 | 108.7 °C |
| 220 °C | 15 sec | Smooth surface | 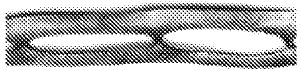 | 131.4 °C |
| 220 °C | 20 sec | Smooth surface | 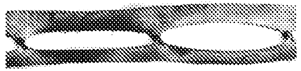 | 146.4 °C |
| 220 °C | 25 sec | Smooth Surface | 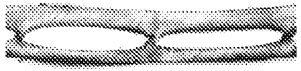 | 156.2 °C |
| 220°C | 30 sec | Smooth Surface | 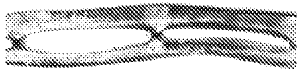 | 162.5 °C |

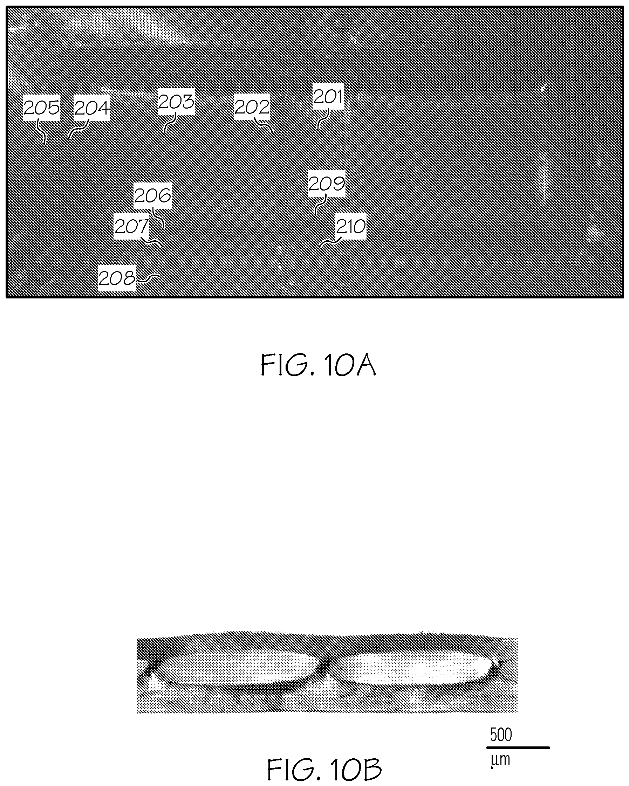

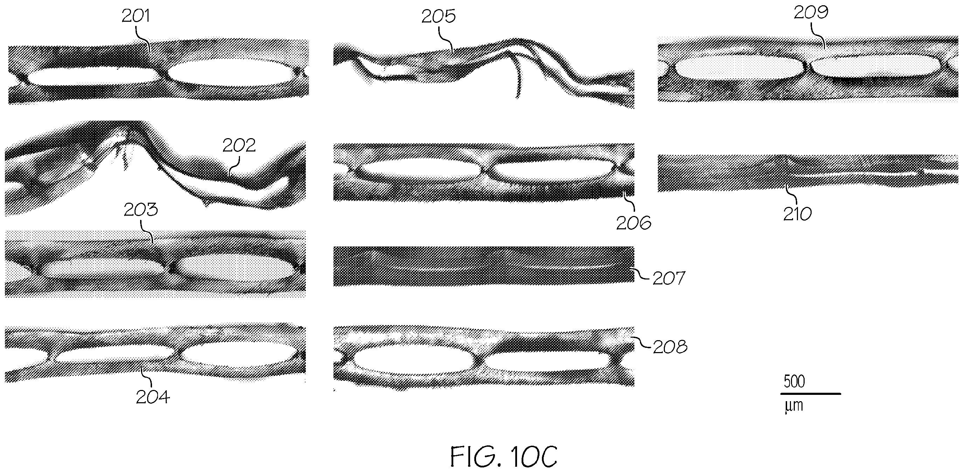

To investigate the change of microcapillary dimension for thermoformed PP microcapillary sheeting with a thickness of 19 mils, which were prepared at a heater temperature of 220 °C for 20 seconds, 10 specific locations were selected, as shown in FIG. 10(a). As compared with 19 mils PP microcapillary sheeting before thermoforming (FIG. 10(b)), the thermoformed parts (FIG. 10(c)) exhibited good microcapillary sizes at locations **201, 203, 206, 208, 209**, and large deformation or collapse at locations **202, 204, 205, 207, 210.** This observation can be further confirmed by volume percentage of microcapillaries in the sheeting indicated in Table 6. The data in Table 6 demonstrates that the volume percentages of microcapillaries in the sheeting for locations **201** and **209** are slightly lower than that before thermoforming, which may due to the relatively higher temperature in the center of IR-reheated sheet.

To summarize, the sheeting temperature for thermoforming of PP-222 microcapillary sheeting should range between the deflection temperature (112 °C) and melting temperature (160 °C) of PP-222). The preferred thermoforming temperature for PP-222 microcapillary sheeting is a temperature between 115 and 140 °C.

**Table 6: Comparison of volume of microcapillary in the sheeting (in FIG. 10) between before and after thermoforming for polypropylene microcapillary sheeting with a thickness of 19 mils reheated at 220 °C for 20 seconds.**

| **Thermoforming of PP MCF (19 mils) at a heater temperature of 220 °C for 20 sec** | |
|---|---|
| **Location** | **Volume of Microcapillary in the Sheeting (vol %)** |
| Before thermoforming | 36.3 |
| **201** | 31.8 |
| **202** | Deformed |
| **203** | 38.1 |
| **204** | 40.0 |
| **205** | Deformed |
| **206** | 37.6 |
| **207** | Collapsed |
| **208** | 39.8 |
| **209** | 32.0 |
| **210** | Partial Collapse |

### Example 4: Thermoformed samples LDPE microcapillary sheeting.

The thermoformability of LDPE microcapillary sheeting with a thickness of 30 mils was evaluated. As depicted in Table 7, the IR heater temperature was varied from 200 °C to 220 °C with different heating times. At a heater temperature of 200 °C, the LDPE microcapillary sheeting could not completely replicate the mold with a reheating time of 20 seconds although the sheeting surface was smooth. The extension of reheating time to 30 seconds resulted in the smaller microcapillary size. When the samples were reheated at a heater temperature of 220 °C for a short period of time (e.g., 10 seconds), the part was not perfectly molded. As the reheating time was increased to 20 seconds, the parts could be successfully made. The further increase in reheating time led to large deformation in the microcapillaries.

**Table 7: Experimental observations and optical microscope images for thermoforming of LDPE microcapillary sheeting with a thickness of 30 mils at a pressure of 20 bars under different reheating conditions.**

| Heater Temperature | Heating Time | Observation | Optical Microscope 500 µm | Sheet Temperature |
|---|---|---|---|---|
| 200 °C | 20 sec | Smooth Surface | 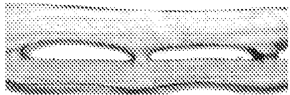 | 90.5 °C |
| 200 °C | 30 sec | Smooth Surface | 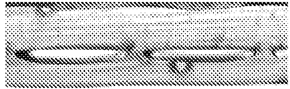 | 110,5 °C |
| 220 °C | 10 sec | Smooth Surface | 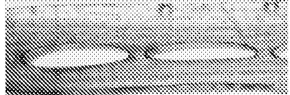 | 70.4 °C |
| 220 °C | 20 sec | Smooth Surface | 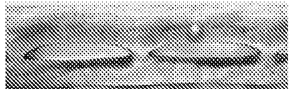 | 101.5 °C |
| 220 °C | 25 sec | Smooth Surface | 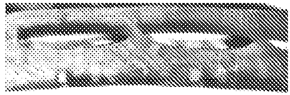 | 114.0 °C |

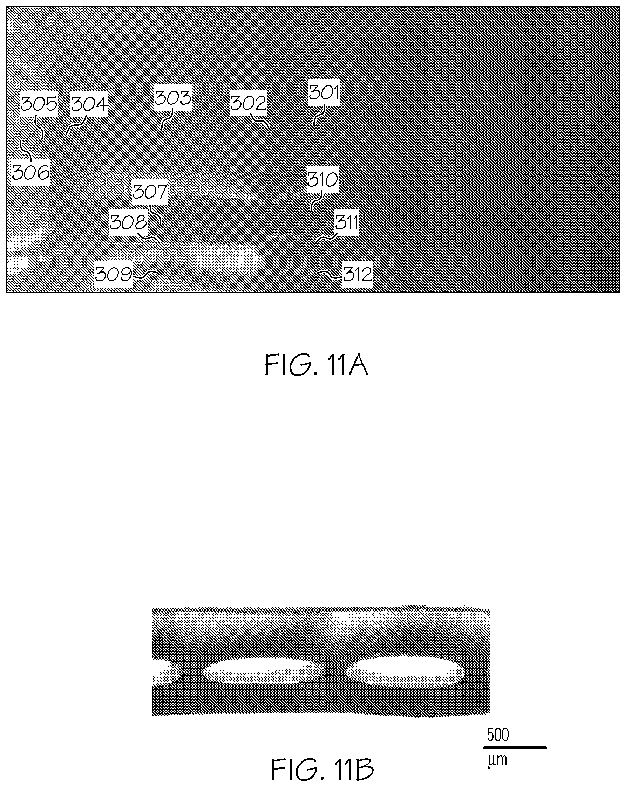

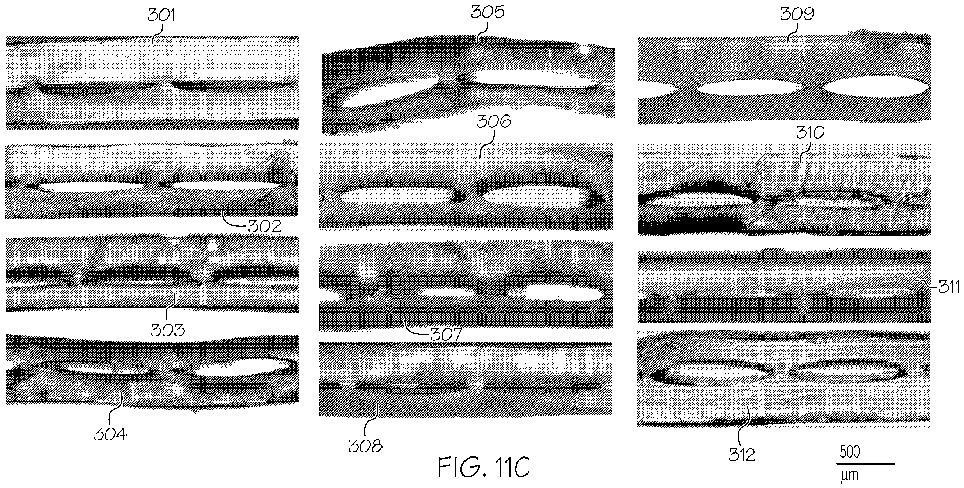

We then focused on the characterization of thermoformed part made at a heater temperature of 200 °C for 20 seconds by optical microscopy, as indicated in FIG. 11. FIG. 11(b) is an optical microscopic image before thermoforming. FIG. 11(c) are optical microscopic images at different locations of the thermoformed sample, as indicated in FIG. 11(a). Large deformation occurred at the edge locations (**302, 305, 308, 311**), while most microcapillaries still existed at other locations. However, the reduction in microcapillary size was more significant for LDPE microcapillary sheeting, as compared with polypropylene microcapillary sheeting with the same thickness. It can be seen from Table 8 that the volume percentage of microcapillaries in the sheeting before thermoforming was 19%, and it was significantly reduced to 13.5%, 14.4% and 14.0% at locations **301, 303,** and **312,** respectively. This was due to the higher reheating temperature at the center of the sample. A slight change of microcapillary dimension was observed at locations **303, 304, 307.** Locations **306** and **309** could basically maintain their sizes.

**Table 8: Comparison of volume of microcapillary in the sheeting (in FIG. 11) between before and after thermoforming for LDPE microcapillary sheeting with a thickness of 30 mils reheated at 220 °C for 20 seconds.**

| **Thermoforming of LDPE MCF (30 mil) at a heater temperature of 220 °C for 20 sec** | |
|---|---|
| **Location** | **Volume of Microcapillary in the Sheeting (vol %**) |
| Before thermoforming | 19.0 |
| **301** | 13.5 |
| **302** | Deformed |
| **303** | 16.7 |
| **304** | 20.0 |
| **305** | 16.5 |
| **306** | 20.6 |
| **307** | 16.5 |
| **308** | 9.1 |
| **309** | 17.4 |
| **310** | 14.4 |
| **311** | 9.2 |
| **312** | 14.0 |

To summarize, the sheeting temperature for thermoforming of this blended LDPE microcapillary sheeting should be less than the melting temperature (112.8 °C) of LDPE-751A. The preferred thermoforming temperature for LDPE microcapillary sheeting is 85-100 °C.

It should be apparent to those skilled in the art that various modifications can be made to the described embodiments without departing from the scope of the claimed subject matter. Thus, it is intended that the specifications cover modifications and variations of the described embodiments provided such modification and variations come within the scope of the appended claims and their equivalents.

## Claims

1. A thermoformed microcapillary sheeting prepared by a process comprising the steps of:
(a) providing a thermoplastic sheeting comprising a thermoplastic material, wherein the thermoplastic sheeting comprises at least one or more microcapillary channel disposed therein, the at least one or more microcapillary channel having an initial volume based on a total volume of the thermoplastic sheeting; and
(b) heating the thermoplastic sheeting to a temperature at which the thermoplastic material is deformable to form a thermoformed microcapillary sheeting with the at least one or more microcapillary channel disposed therein, the at least one or more microcapillary channel having a final volume based on a total volume of the thermoformed microcapillary sheeting;
**characterized in that** the final volume of the at least one or more microcapillary channel of the thermoformed microcapillary sheeting is at least about 10 percent of the initial volume of the at least one or more microcapillary channel of the thermoplastic sheeting.

2. The thermoformed microcapillary sheeting of claim 1, wherein the thermoplastic material comprises polyolefins, olefin copolymers, or mixtures thereof.

3. The thermoformed microcapillary sheeting of claim 2, wherein the polyolefins are selected from the group consisting of polypropylene, polyethylene, or mixtures thereof.

4. The thermoformed microcapillary sheeting of claim 3, wherein the thermoplastic sheeting is heated to a temperature that is greater than the deflection temperature and up to the melting temperature of the polyolefins.

5. The thermoformed microcapillary sheeting of claim 3, wherein the thermoplastic sheeting is heated to a temperature that is greater than the melting temperature of the polyolefins.

6. The thermoformed microcapillary sheeting of claim 1, wherein the thermoplastic material comprises an amorphous polymer.

7. The thermoformed microcapillary sheeting of claim 6, wherein the thermoplastic sheeting is heated above the glass transition temperature of the amorphous polymer.

8. The thermoformed microcapillary sheeting of claim 2, wherein the olefin copolymers are selected from the group consisting of ethylene-propylene copolymers, ethylene-butene copolymers, ethylene-hexene copolymers, ethylene-octene copolymers, ethylene-methacrylate copolymers, ethylene-vinyl acetate copolymers, and mixtures thereof.

9. The thermoformed microcapillary sheeting of claim 3, wherein the polyethylene is **characterized by** having a melt index in the range of 0.1 to 500 g/10 minutes when measured at 190° C and 2.16 Kg according to ASTM D1238.

10. The thermoformed microcapillary sheeting of claim 3, wherein the polypropylene is **characterized by** having a melt index in the range of 0.1 to 500 g/10 minutes when measured at 230° C and 2.16 Kg according to ASTM D1238.

11. The thermoformed microcapillary sheeting according to any of the preceding claims, wherein the final volume of the at least one or more microcapillary channels of the thermoformed microcapillary sheeting, based on a total volume of the thermoformed microcapillary sheeting, is at least about 10 percent of the initial volume of the at least one or more microcapillary channels of the thermoplastic sheeting, based on a total volume of the thermoplastic microcapillary sheeting.

12. The thermoformed microcapillary sheeting according to any of the preceding claims, wherein the one or more microcapillary channels comprise from about 5 percent to about 80 percent by volume of the total volume of the thermoformed microcapillary sheeting.

13. The thermoformed microcapillary sheeting according to one of the preceding claims, wherein the microcapillary channels are filled with air or other inert gases.

14. A multilayer structure comprising the thermoformed microcapillary sheeting of any of the preceding claims.

15. An article comprising the thermoformed microcapillary sheeting of any of the preceding claims.

## Patentansprüche

1. Ein thermogeformtes mikrokapillares Folienmaterial, hergestellt durch ein Verfahren, das die folgenden Schritte beinhaltet:
(a) Bereitstellen eines thermoplastischen Folienmaterials, beinhaltend ein thermoplastisches Material, wobei das thermoplastische Folienmaterial mindestens einen oder mehrere darin angeordnete mikrokapillare Kanäle beinhaltet, wobei der mindestens eine oder die mehreren mikrokapillaren Kanäle ein anfängliches Volumen, bezogen auf ein Gesamtvolumen des thermoplastischen Folienmaterials, aufweisen; und
(b) Erwärmen des thermoplastischen Folienmaterials auf eine Temperatur, bei der das thermoplastische Material verformbar ist, um ein thermogeformtes mikrokapillares Folienmaterial mit dem mindestens einen oder den mehreren darin angeordneten mikrokapillaren Kanälen zu formen, wobei der mindestens eine oder die mehreren mikrokapillaren Kanäle ein endgültiges Volumen, bezogen auf ein Gesamtvolumen des thermogeformten mikrokapillaren Folienmaterials, aufweisen;
**dadurch gekennzeichnet, dass** das endgültige Volumen des mindestens einen oder der mehreren mikrokapillaren Kanäle des thermogeformten mikrokapillaren Folienmaterials mindestens etwa 10 Prozent des anfänglichen Volumens des mindestens einen oder der mehreren mikrokapillaren Kanäle des thermoplastischen Folienmaterials beträgt.

2. Thermogeformtes mikrokapillares Folienmaterial gemäß Anspruch 1, wobei das thermoplastische Material Polyolefine, Olefincopolymere oder Mischungen davon beinhaltet.

3. Thermogeformtes mikrokapillares Folienmaterial gemäß Anspruch 2, wobei die Polyolefine ausgewählt sind aus der Gruppe, bestehend aus Polypropylen, Polyethylen oder Mischungen davon.

4. Thermogeformtes mikrokapillares Folienmaterial gemäß Anspruch 3, wobei das thermoplastische Folienmaterial auf eine Temperatur, die höher ist als die Formbeständigkeitstemperatur, und bis zur Schmelztemperatur der Polyolefine erwärmt wird.

5. Thermogeformtes mikrokapillares Folienmaterial gemäß Anspruch 3, wobei das thermoplastische Folienmaterial auf eine Temperatur, die höher ist als die Schmelztemperatur der Polyolefine, erwärmt wird.

6. Thermogeformtes mikrokapillares Folienmaterial gemäß Anspruch 1, wobei das thermoplastische Material ein amorphes Polymer beinhaltet.

7. Thermogeformtes mikrokapillares Folienmaterial gemäß Anspruch 6, wobei das thermoplastische Folienmaterial über die Glasübergangstemperatur des amorphen Polymers erwärmt wird.

8. Thermogeformtes mikrokapillares Folienmaterial gemäß Anspruch 2, wobei die Olefincopolymere ausgewählt sind aus der Gruppe, bestehend aus Ethylen-Propylen-Copolymeren, Ethylen-Buten-Copolymeren, Ethylen-Hexen-Copolymeren, Ethylen-Octen-Copolymeren, Ethylen-Methacrylat-Copolymeren, Ethylen-Vinylacetat-Copolymeren und Mischungen davon.

9. Thermogeformtes mikrokapillares Folienmaterial gemäß Anspruch 3, wobei das Polyethylen **dadurch gekennzeichnet ist, dass** es einen Schmelzindex im Bereich von 0,1 bis 500 g/10 Minuten aufweist, wenn bei 190 °C und 2,16 kg nach ASTM D1238 gemessen.

10. Thermogeformtes mikrokapillares Folienmaterial gemäß Anspruch 3, wobei das Polypropylen **dadurch gekennzeichnet ist, dass** es einen Schmelzindex im Bereich von 0,1 bis 500 g/10 Minuten aufweist, wenn bei 230 °C und 2,16 kg nach ASTM D1238 gemessen.

11. Thermogeformtes mikrokapillares Folienmaterial gemäß einem der vorhergehenden Ansprüche, wobei das endgültige Volumen des mindestens einen oder der mehreren mikrokapillaren Kanäle des thermogeformten mikrokapillaren Folienmaterials, bezogen auf ein Gesamtvolumen des thermogeformten mikrokapillaren Folienmaterials, mindestens etwa 10 Prozent des anfänglichen Volumens des mindestens einen oder der mehreren mikrokapillaren Kanäle des thermoplastischen Folienmaterials, bezogen auf ein Gesamtvolumen des thermoplastischen mikrokapillaren Folienmaterials, beträgt.

12. Thermogeformtes mikrokapillares Folienmaterial gemäß einem der vorhergehenden Ansprüche, wobei der eine oder die mehreren mikrokapillaren Kanäle etwa 5 Volumenprozent bis etwa 80 Volumenprozent des Gesamtvolumens des thermogeformten mikrokapillaren Folienmaterials beinhalten.

13. Thermogeformtes mikrokapillares Folienmaterial gemäß einem der vorhergehenden Ansprüche, wobei die mikrokapillaren Kanäle mit Luft oder anderen Inertgasen gefüllt sind.

14. Eine Mehrschichtstruktur, beinhaltend das thermogeformte mikrokapillare Folienmaterial gemäß einem der vorhergehenden Ansprüche.

15. Ein Artikel, beinhaltend das thermogeformte mikrokapillare Folienmaterial gemäß einem der vorhergehenden Ansprüche.

## Revendications

1. Une feuille microcapillaire thermoformée préparée par un procédé comprenant les étapes consistant à :
(a) fournir une feuille thermoplastique comprenant une matière thermoplastique, la feuille thermoplastique comprenant au moins un canal microcapillaire ou plus disposé à l'intérieur, l'au moins un canal microcapillaire ou plus ayant un volume initial rapporté à un volume total de la feuille thermoplastique ; et
(b) chauffer la feuille thermoplastique jusqu'à une température à laquelle la matière thermoplastique est déformable afin de former une feuille microcapillaire thermoformée avec l'au moins un canal microcapillaire ou plus disposé à l'intérieur, l'au moins un canal microcapillaire ou plus ayant un volume final rapporté à un volume total de la feuille microcapillaire thermoformée ;
**caractérisée en ce que** le volume final de l'au moins un canal microcapillaire ou plus de la feuille microcapillaire thermoformée est d'au moins environ 10 pour cent du volume initial de l'au moins un canal microcapillaire ou plus de la feuille thermoplastique.

2. La feuille microcapillaire thermoformée de la revendication 1, dans laquelle la matière thermoplastique comprend des polyoléfines, des copolymères d'oléfines, ou des mélanges de ceux-ci.

3. La feuille microcapillaire thermoformée de la revendication 2, dans laquelle les polyoléfines sont sélectionnées dans le groupe constitué du polypropylène, du polyéthylène, ou de mélanges de ceux-ci.

4. La feuille microcapillaire thermoformée de la revendication 3, dans laquelle la feuille thermoplastique est chauffée jusqu'à une température qui est supérieure à la température de fléchissement et pouvant aller jusqu'à la température de fusion des polyoléfines.

5. La feuille microcapillaire thermoformée de la revendication 3, dans laquelle la feuille thermoplastique est chauffée jusqu'à une température qui est supérieure à la température de fusion des polyoléfines.

6. La feuille microcapillaire thermoformée de la revendication 1, dans laquelle la matière thermoplastique comprend un polymère amorphe.

7. La feuille microcapillaire thermoformée de la revendication 6, dans laquelle la feuille thermoplastique est chauffée au-dessus de la température de transition vitreuse du polymère amorphe.

8. La feuille microcapillaire thermoformée de la revendication 2, dans laquelle les copolymères d'oléfines sont sélectionnés dans le groupe constitué de copolymères d'éthylène-propylène, de copolymères d'éthylène-butène, de copolymères d'éthylène-hexène, de copolymères d'éthylène-octène, de copolymères d'éthylène-méthacrylate, de copolymères d'éthylène-acétate de vinyle, et de mélanges de ceux-ci.

9. La feuille microcapillaire thermoformée de la revendication 3, dans laquelle le polyéthylène est **caractérisé par** le fait d'avoir un indice de fluidité à l'état fondu compris dans la gamme allant de 0,1 à 500 g/10 minutes lorsque mesuré à 190 °C et 2,16 kg conformément à l'ASTM D1238.

10. La feuille microcapillaire thermoformée de la revendication 3, dans laquelle le polypropylène est **caractérisé par** le fait d'avoir un indice de fluidité à l'état fondu compris dans la gamme allant de 0,1 à 500 g/10 minutes lorsque mesuré à 230 °C et 2,16 kg conformément à l'ASTM D1238.

11. La feuille microcapillaire thermoformée selon n'importe lesquelles des revendications précédentes, dans laquelle le volume final des au moins un ou plusieurs canaux microcapillaires de la feuille microcapillaire thermoformée, rapporté au volume total de la feuille microcapillaire thermoformée est d'au moins environ 10 pour cent du volume initial des au moins un ou plusieurs canaux microcapillaires de la feuille thermoplastique, rapporté au volume total de la feuille microcapillaire thermoplastique.

12. La feuille microcapillaire thermoformée selon n'importe lesquelles des revendications précédentes, dans laquelle les au moins un ou plusieurs canaux microcapillaires représentent d'environ 5 pour cent à environ 80 pour cent en volume du volume total de la feuille microcapillaire thermoformée.

13. La feuille microcapillaire thermoformée selon l'une des revendications précédentes, dans laquelle les canaux microcapillaires sont remplis d'air ou d'autres gaz inertes.

14. Une structure multicouche comprenant la feuille microcapillaire thermoformée de n'importe lesquelles des revendications précédentes.

15. Un article comprenant la feuille microcapillaire thermoformée de n'importe lesquelles des revendications précédentes.
